**Europäisches Patentamt**

**European Patent Office**

**Office européen des brevets**

(11) Veröffentlichungsnummer: **0 128 375**
**A1**

## (12) EUROPÄISCHE PATENTANMELDUNG

(21) Anmeldenummer: **84105386.1**

(22) Anmeldetag: **12.05.84**

(51) Int. Cl.³: **B 22 D 11/126**, B 22 D 31/00, B 23 C 3/12, B 23 C 3/14

(30) Priorität: **17.05.83 DE 3317902**

(43) Veröffentlichungstag der Anmeldung: **19.12.84**
**Patentblatt 84/51**

(84) Benannte Vertragsstaaten: **AT BE CH DE FR GB IT LI LU NL SE**

(71) Anmelder: **Wiegard, Gustav, Cörmannstrasse 6-8, D-5810 Witten (DE)**

(72) Erfinder: **Wiegard, Gustav, Küsterrigge 9, D-5810 Witten (DE)**
Erfinder: **Hölter, Karl, Küsterigge 9, D-5810 Witten (DE)**

(74) Vertreter: **Schulze Horn, Hannes, Dr.-Ing., Im Defdahl 51, D-4600 Dortmund 1 (DE)**

(54) Verfahren und Vorrichtung zum Entgraten von Stranggussbrammen.

㊼ Ein Verfahren und Vorrichtung zum Entgraten von Stranggußbrammen (1) o.ä., bei denen bei Teilvorgängen, insbesondere durch Brennschneiden, Grate entstanden sind. Die Grate werden durch Rollenwerkzeuge abgeschert. Zur Durchführung des Verfahrens ist eine Vorrichtung (4) vorgesehen, die Abgratrollen (2, 3) mit Scherwirkung in einem Abgratrollengestell aufweist, wobei die Abgratrollen vertikal und horizontal angeordnet sind und zusammenwirken, so daß ein Abscherkeil gebildet wird.

## Beschreibung

Die Erfindung betrifft ein Verfahren zum Entgraten von Stranggußbrammen o. ä., bei denen bei Teilvorgängen, insbesondere durch Brennschneiden, Grate entstanden sind, sowie eine Vorrichtung zum Entgraten von Stranggußbrammen.

Beim Stranggießen großer Querschnitte muß der Gießstrang, um in Brammenform weiterverarbeitet werden zu können, längs und quergeteilt werden. Diese Längs- und Querteilung wird bisher durch Brennschneiden vorgenommen, da spanende Verfahren bei der hohen Temperatur, die der Gießstrang beim Teilen noch aufweist, versagen. Beim Brennschneiden entsteht ein Grat, der vor der Weiterverarbeitung der Brammen entfernt werden muß. Dieser Grat wird durch Abbrennen direkt nach dem Teilen oder durch spanende Verfahren nach dem Erkalten der einzelnen Brammen entfernt.

Das Abbrennen des Grates nach dem Teilen ist kostenungünstig, da es energie- und zeitaufwendig ist und schlecht automatisiert werden kann. Bei einer spanenden Entfernung des Grates ergeben sich erhebliche Probleme durch die Härte und Sprödigkeit des Grates. Weiterhin wird die Handhabung der Brammen bis zur Entgratung erheblich erschwert.

Es ist Aufgabe der Erfindung, ein Verfahren und eine Vorrichtung anzugeben, die gegenüber den bisherigen Methoden eine kostengünstigere, automatisierte und sichere Gratentfernung ermöglichen.

Die Aufgabe wird dadurch gelöst, daß die Grate abgeschert werden. Durch einen Schervorgang, der unmittelbar an das Trennen angeschlossen werden kann, ergibt sich vorteilhaft eine sichere, automatisierbare Entfernung der Grate, die in bisher unerreichter Weise kostengünstig durchgeführt werden kann. Das Abscheren der Grate ist überraschenderweise möglich, obwohl diese ungleichmäßig groß sind und eine Temperatur aufweisen, die oberhalb der üblichen Temperaturen für spanende oder andere Metallbearbeitungsvorgänge liegen. Der von dem Fachmann erwartete hohe Verschleiß der Werkzeuge tritt vorteilhafterweise nicht auf.

In Ausgestaltung der Erfindung ist vorgesehen, daß das Abscheren durch das Vorbeiführen der Brammenteile an Rollenwerkzeugen erfolgt. Rollenwerkzeuge haben sich gegenüber feststehenden messerähnlichen Werkzeugen als besonders günstig herausgestellt. Durch die Verwendung von Rollenwerkzeugen ergibt sich auch vorteilhafterweise eine Abkühlung der Scherkanten, die sich sonst durch die noch heißen Brammen zu sehr aufheizen würden.

In weiterer Ausgestaltung ist vorgesehen, daß das Abscheren durch das Vorbeiführen der Rollenwerkzeuge an den Brammenteilen erfolgt. In Querrichtung weist die Bramme im allgemeinen keine Eigenbewegung auf, die für den Schervorgang genutzt werden könnte. Die Änderung des Bewegungsablaufs hat deshalb den Vorteil, daß sich die Grate in Querrichtung der Bramme besonders einfach entfernen lassen, ohne daß sich erstaunlicherweise eine zu aufwendige Durchführung des Verfahrens ergibt.

In weiterer Ausgestaltung der Erfindung ist vorgesehen, daß die Rollenwerkzeuge mittels Keilwirkung arbeiten. Die Anordnung der Rollenwerkzeuge derart, daß sie mit Keilwirkung abscheren, hat sich als besonders günstig erwiesen und vermindert den Kraftbedarf bei dem Abscheren erheblich.

In weiterer Ausgestaltung der Erfindung ist vorgesehen, daß die Rollenwerkzeuge die Keilwirkung einer gegenüber der Brammenkante überlappenden Rolle ausnutzen. Durch eine Überlappung ist eine sichere, vollständige und glatte Entgratung sichergestellt. So ergibt sich eine Brammenqualität, die gegenüber den bekannten Verfahren noch gesteigert ist. Sowohl die Unterseite als auch die Trennfläche selbst werden zuverlässig von allen Gratteilen gesäubert.

Zur Durchführung des Verfahrens zum Entgraten von Stranggußbrammen o. ä. ist eine Vorrichtung vorgesehen, die Abgratrollen mit Scherwirkung in einem Abgratrollengestell aufweist. So kann das erfindungsgemäße Verfahren durchgeführt werden, wobei die Scherwirkung für einen überraschend niedrigen Kraftbedarf des Abgratvorganges sorgt.

In weiterer Ausgestaltung der Erfindung ist vorgesehen, daß die Vorrichtung zumindest zwei Abgratrollen aufweist, die schervorgangsmäßig zusammenwirken. Durch zwei Abgratrollen ist eine sichere Abscherung aller Grateile gewährleistet, wobei die Positionen der Abgratrollen derart sind, daß der Abschervorgang über einen keilförmigen Scherspan erfolgt.

In weiterer Ausgestaltung der Erfindung ist vorgesehen, daß die Vorrichtung vertikal / horizontal oder horizontal / horizontal zusammenwirkende Abgratrollen aufweist. Hierdurch ergibt sich im Zusammenwirken mit einer Überdeckung der Abgratrollen eine sichere und beide Flächen betreffende Abscherung des Grates.

In weiterer Ausgestaltung der Erfindung ist vorgesehen, daß die Vorrichtung Abgratrollen mit einer Schubausgleichskante aufweist, wobei die Schubausgleichskante vorzugsweise eine Neigung von 45° hat. Durch die Verwendung von Abgratrollen mit Schubausgleichskante werden die Axialkräfte, die auf die Abgratrollen wirken, erheblich vermindert. So ist vorteilhaft die Verwendung eines kleineren kostengünstigen Lagers für die Rolle möglich. Die 45°-Ausführung der Schubausgleichskante erlaubt es dabei, die Toleranzen in der Brammendicke auszugleichen, ohne daß ein zu großes seitliches Ausweichen der Abgratrolle notwendig ist.

In weiterer Ausgestaltung der Erfindung ist vorgesehen, daß die Vorrichtung wahlweise auch schräggestellte Abgratrollenreihen aufweist. Schräggestellte Abgratrollenreihen können nach Art eines spanenden Messersystems ohne dessen Empfindlichkeit wirken, so daß sich eine weitere Verminderung der Scherkräfte ergeben. Darüberhinaus ist eine größere Flexibilität bei der Anpassung an unterschiedliche Brammenabmessungen möglich. Das Gesamtgewicht der Abgratvorrichtung kann außerdem erheblich vermindert werden.

In weiterer Ausgestaltung der Erfindung ist vorgesehen, daß die Vorrichtung als Schweißkonstruktion ausgebildet ist. So ist eine kostengünstige Herstellung möglich. Es ist dabei besonders vorteilhaft, wenn die Abgratrollen Überlastsicherungen aufweisen. So braucht die Vorrichtung nicht übermäßig stark dimensioniert zu werden. Bei einem zu starken Anwachsen der Scherkräfte weichen die Abgratrollen aus.

In weiterer Ausgestaltung der Erfindung ist vorgesehen, daß die Abgratrollengestelle verfahrbar ausgebildet sind. In Querrichtung z.B. weist die Bramme im allgemeinen keine Eigenbewegung auf, die für dem Schervorgang genutzt werden könnte. Die Verfahrbarkeit der Rollengestelle ermöglicht es deshalb mit Vorteil, besonders einfach insbesondere Grate in Querrichtung der Bramme zu entfernen, ohne daß sich erstaunlicherweise eine aufwendige Vorrichtung ergibt. Die weitere Einstellmöglichkeit der Abgratrollen erlaubt Korrekturen, die z.B. durch Verschleiß, Verzug oder Toleranzen notwendig sind. Weiterhin ist eine Anpassung an unterschiedliche Brammenabmessungen möglich. Die erfindungsgemäße Vorrichtung ist so nicht auf eine Brammengröße fixiert.

Die Erfindung wird in Zeichnungen in einer bevorzugten Ausführungsform gezeigt, wobei aus den Zeichnungen weitere vorteilhafte Einzelheiten der Erfindung entnehmbar sind.

Die Zeichnungen zeigen im einzelnen in schematischer Darstellung, wobei gleiche Teile in verschiedenen Ansichten gleich gekennzeichnet sind, in:

| | |
|---|---|
| Fig. 1 | eine Vorrichtung mit vertikal / horizontal Abgratrollen in Längsrichtung der Bramme, |
| Fig. 2 | eine Ansicht der Vorrichtung entsprechend Fig. 1 in Querrichtung der Bramme, |
| Fig. 3 | eine Aufsicht auf die Vorrichtung, entsprechend Fig. 1, |
| Fig. 4, 5, 6 | den Figuren 1, 2 und 3 entsprechende Ansichten mit horizontal / horizontal wirksamen Abgratrollen, |
| Fig. 7 | eine Vorrichtung mit einer Abgratrollenreihe, |
| Fig. 8 | eine Abgratrolle mit Druckausgleichskante sowie |
| Fig. 9 | eine Rolle mit Druckausgleichskante in der Vorrichtung in Brammenlängsrichtung gesehen. |

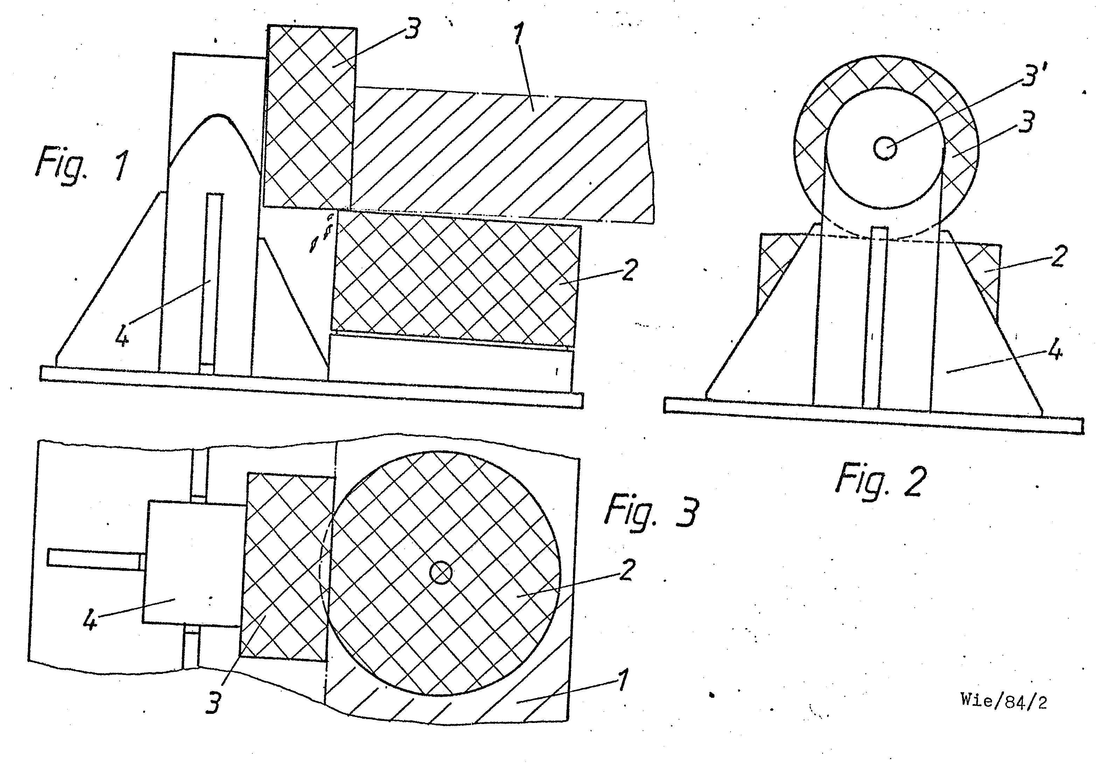

In den Fig. 1, 2 und 3 bezeichnet 1 die Bramme, 2 die Horizontal- und 3 die Vertikalabgratrolle. Die beiden Abgratrollen sind in der Vorrichtung 4 gelagert, wobei in Fig. 2 3' die Welle der Vertikalabgratrolle 3 angibt. Die Vorrichtung 4 selbst ist eine Schweißkonstruktion mit einer Grundplatte und Lagerschalen, die durch Rippen gegenüber der Grundplatte abgestützt sind.

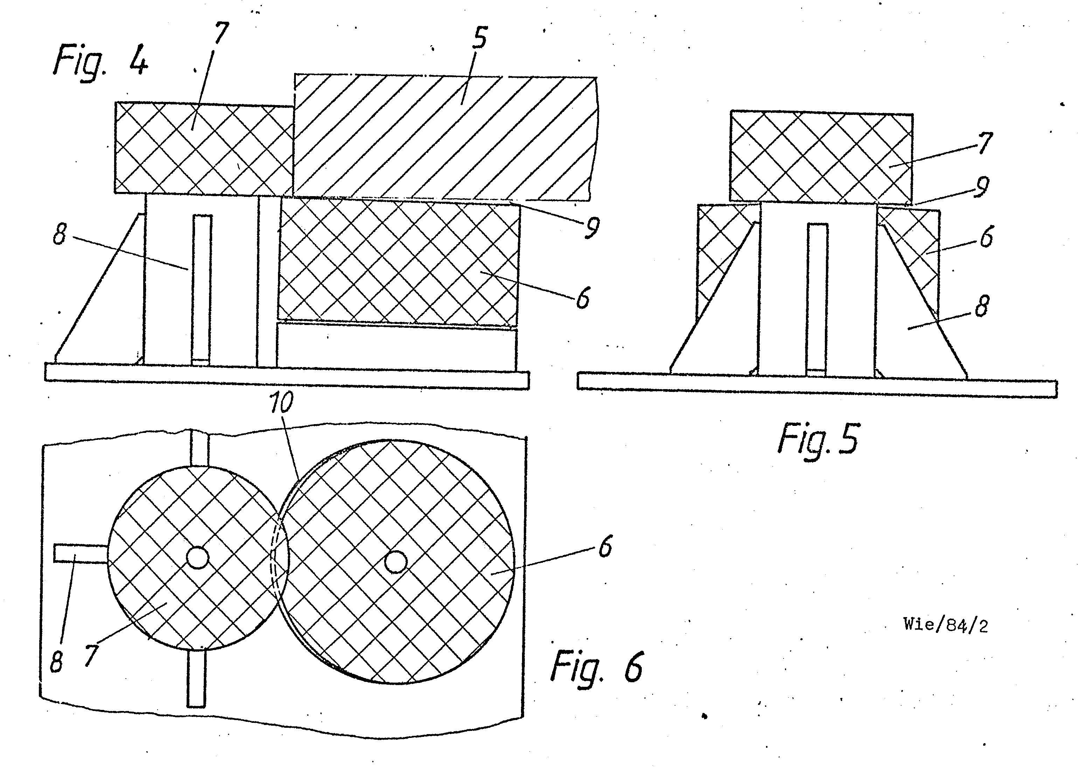

In den Fig. 4, 5 und 6 bezeichnet jeweils 5 die Bramme, 6 die Horizontalabgratrolle unter der Bramme und 7 eine weitere Horizontalabgratrolle, die anstelle der Vertikalabgratrolle 3 in den Fig. 1, 2 und 3 tritt. Auch hier bildet die Horizontalabgratrolle 6 einen Winkel gegenüber der Bramme 5, so daß ein Spalt 9 entsteht, der verhindert, daß die Horizontalrolle 6 an der Bramme 5 anliegt. Aus Fig. 6 ist die sich so ergebende Ansicht der Abgratrollenaußenwand 10 ersichtlich.

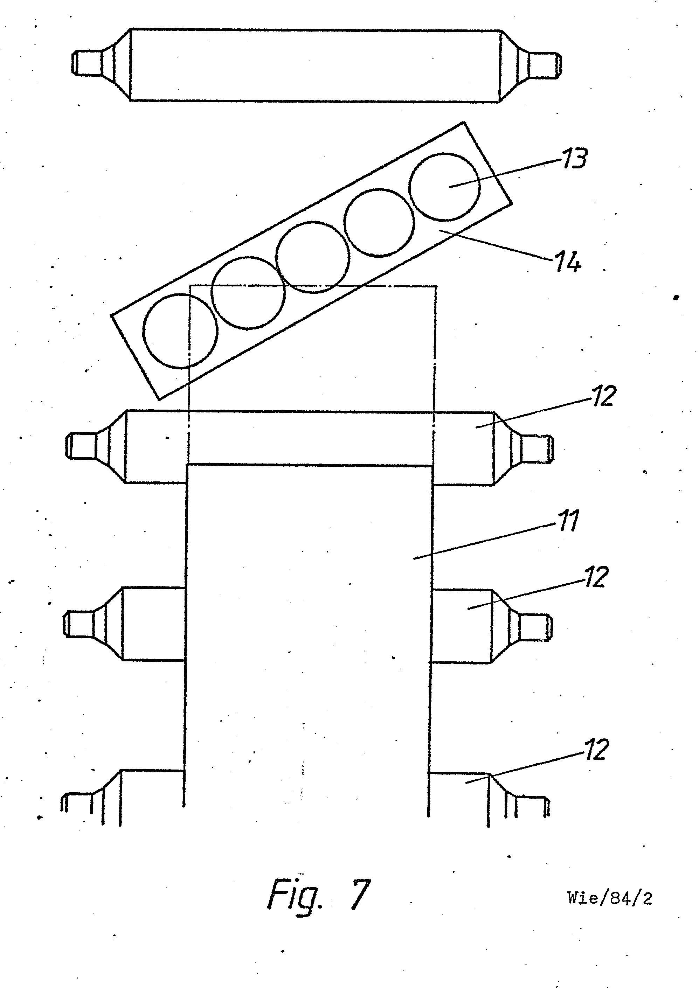

In Fig. 7 bezeichnet 11 die Bramme, 12 die Führungsrollen der Bramme 11, sowie 13 die einzelnen Rollen in einem Rollengestell 14. So ergibt sich eine besonders vorteilhafte Ausführung mit besonders kleinen Scherköpfen um die Grate zu entfernen.

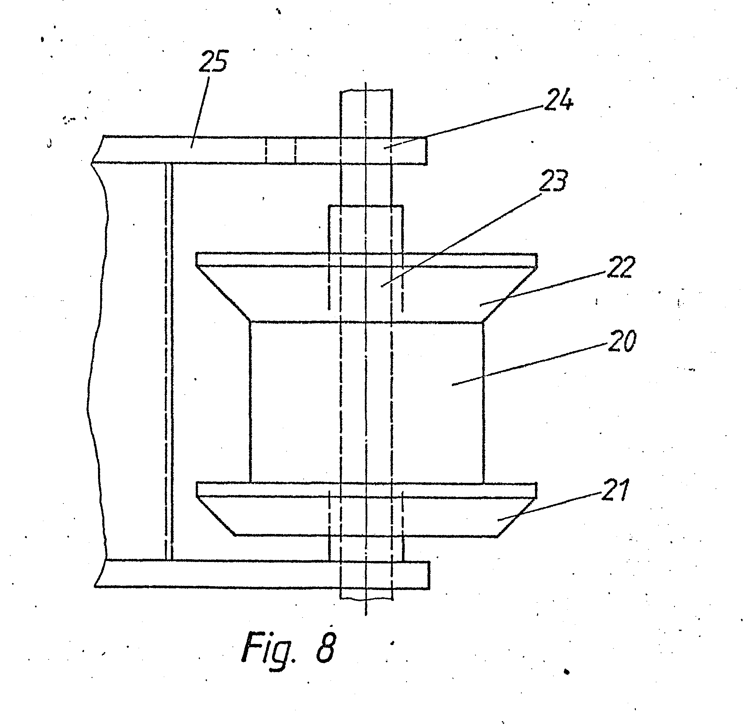

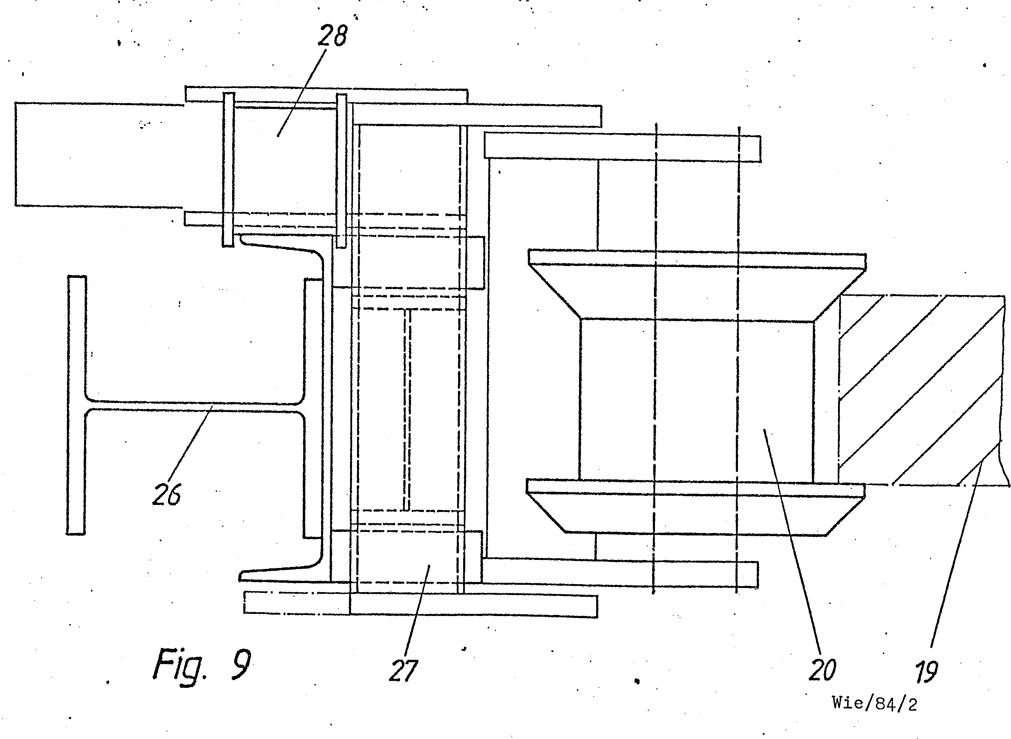

In Fig. 8 und 9 bezeichnet 20 eine Abgratrolle mit Druckausgleichskante in der Gestellbohrung 24, wobei vorteilhaft an der Position 23 Tonnenlager verwendet werden können, da diese Abgratrolle wesentlich geringere Axialkräfte aufweist als eine Abgratrolle ohne Druckausgleichskante. Die Scherfläche selbst ist mit 21 bezeichnet. Die Druckausgleichskante 22 hat vorzugsweise eine seitliche Neigung von 45°. Diese Neigung hat sich als optimal herausgestellt. Sie ermöglicht einen genügenden Axialdruckausgleich bei gleichzeitiger, nicht zu großer Radialbewegung beim Ausgleich der Brammentoleranzen.

In Fig. 9 ist die Rolle 20 in das Gestell 25 eingebaut. Die Bramme selbst ist mit 19 bezeichnet, während 27, 28 Führungsrollen für die Vorrichtung bezeichnen. Seitlich wird die Vorrichtung durch den Träger 26 abgestützt.

Die erfindungsgemäße Vorrichtung, die sowohl stationär als auch mitfahrbar mit der Bramme ausgebildet sein kann, löst überraschenderweise die Probleme beim Abgraten von Brammen in bisher unerreicht günstiger Weise. Sie ist nicht nur auf das Abgraten von Brammen beschränkt, auch andere längliche Teile wie Walzknüppel, Spaltbänder etc. können mit entsprechend verkleinerten Ausführungen entgratet werden.

In dargestellter Weise ist die erfindungsgemäße Vorrichtung ungekühlt. Ohne den Rahmen der Erfindung zu verlassen, können die Rollen jedoch ebenso wasser- oder luftgekühlt werden, sei es durch Sprühkühlung, sei es durch das Einbringen der Kühlflüssigkeit in die Abgratrollen selbst.

Anlage zum Patentgesuch   Wie/84/2
von Herrn Gustav Wiegard,
Witten

<u>Verfahren und Vorrichtung zum Entgraten von
Stranggußbrammen</u>

<u>Patentansprüche</u>

1. Verfahren zum Entgraten von Stranggußbrammen o. ä.,
bei denen bei Teilvorgängen, insbesondere durch Brennschneiden, Grate entstanden sind, d a d u r c h  g e -
k e n n z e i c h n e t, daß die Grate abgeschert
werden.

2. Verfahren nach Anspruch 1, d a d u r c h  g e k e n n -
z e i c h n e t, daß das Abscheren durch das
Vorbeiführen der Brammenteile an Rollenwerkzeugen
erfolgt.

3. Verfahren nach Anspruch 1 oder 2, d a d u r c h  g e -
k e n n z e i c h n e t, daß das Abscheren durch das
Vorbeiführen der Rollenwerkzeuge an den Brammenteilen
erfolgt.

4. Verfahren nach Anspruch 1, 2 oder 3, d a d u r c h
g e k e n n z e i c h n e t, daß die Rollenwerkzeuge
mittels Keilwirkung arbeiten.

5. Verfahren nach Anspruch 1, 2, 3 oder 4, d a d u r c h
g e k e n n z e i c h n e t, daß die Rollenwerkzeuge
die Keilwirkung einer gegenüber der Brammenkante
überlappenden Rolle ausnutzen.

6. Vorrichtung zur Durchführung des Verfahrens nach einem
der Ansprüche 1, 2, 3, 4 oder 5, d a d u r c h g e -
k e n n z e i c h n e t, daß sie Abgratrollen
(2,3,6,7,13,20) mit Scherwirkung in einem Abgratrollengestell (4,8,14,24) aufweist.

7. Vorrichtung nach Anspruch 6, d a d u r c h g e -
k e n n z e i c h n e t, daß sie zumindest zwei
Abgratrollen (2,3,6,7,13,20) aufweist, die
schervorgangsmäßig zusammen wirken.

8. Vorrichtung nach Anspruch 6 oder 7, d a d u r c h
g e k e n n z e i c h n e t, daß sie vertikal / horizontal oder horizontal / horizontal zusammenwirkende
Abgratrollen (2,3,6,7,13,20) aufweist.

9. Vorrichtung nach Anspruch 6, 7 oder 8, d a d u r c h
g e k e n n z e i c h n e t, daß die Abgratrollen
(2,3,6,7,13,20) eine Überdeckung aufweisen.

10. Vorrichtung nach Anspruch 6, 7, 8 oder 9, d a -
d u r c h g e k e n n z e i c h n e t, daß sie
Abgratrollen (2,3,6,7,13,20) mit einer
Schubausgleichskante (22) aufweist, wobei die
Schubausgleichskante (22) vorzugsweise eine Neigung
von 45° hat.

11. Vorrichtung nach Anspruch 6, 7, 8, 9 oder 10, d a -
d u r c h g e k e n n z e i c h n e t, daß sie
wahlweise auch schräggestellte Abgratrollenreihen
aufweist.

0128375
Wie/84/2

12. Vorrichtung nach Anspruch 6, 7, 8, 9, 10 oder 11, d a - d u r c h   g e k e n n z e i c h n e t , daß sie als Schweißkonstruktion ausgebildet ist.

13. Vorrichtung nach Anspruch 6, 7, 8, 9, 10, 11 oder 12, d a d u r c h   g e k e n n z e i c h n e t , daß die Abgratrollen (2,3,6,7,13,20) Überlastsicherungen aufweisen.

14. Vorrichtung nach Anspruch 6, 7, 8, 9, 10, 11, 12 oder 13, d a d u r c h   g e k e n n z e i c h n e t , daß die Abgratrollengestelle verfahrbar ausgebildet sind.

15. Vorrichtung nach Anspruch 6, 7, 8, 9, 10, 11, 12, 13 oder 14, d a d u r c h   g e k e n n z e i c h n e t , daß die einzelnen Abgratrollen (2,3,6,7,13,20) einstellbar ausgebildet sind.

- Beschreibung -

Fig. 1

3

1

4

4

2

Fig. 2

3'

3

2

4

Fig. 3

4

3

2

1

1/5

0128375

Wie/84/2

Fig. 4

Fig. 5

Fig. 6

Wie/84/2

13

14

12

11

12

12

Fig. 7

Wie/84/2

Fig. 8

Wie/84/2

Fig. 9

0128375

Wie/84/2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-2 849 208 (SACK GMBH) <br> * Anspruch 1 * <br><br> --- | 1,6 | B 22 D 11/126 <br> B 22 D 31/00 <br> B 23 C 3/12 <br> B 23 C 3/14 |
| A | EP-A-0 053 274 (SIEMAG TRANSPLAN GMBH) <br> * Ansprüche 1,6 * <br><br> --- | 1,6 | |
| A | EP-A-0 032 975 (KIESERLING & ALBRECHT) <br> * Ansprüche 1,5,6 * <br><br> ----- | 1,6 | |

| RECHERCHIERTE SACHGEBIETE (Int. Cl. ³) |
|---|
| B 22 D 11/00 <br> B 22 D 31/00 <br> B 23 C 3/00 |

Der vorliegende Recherchenbericht wurde für alle Patentansprüche erstellt.

| Recherchenort <br> BERLIN | Abschlußdatum der Recherche <br> 06-08-1984 | Prüfer <br> GOLDSCHMIDT G |
|---|---|---|